# EUROPEAN PATENT APPLICATION

(11) **EP 4 815 426 A1**
(43) Date of publication of application: **30.09.2026**
(21) Application number: 25198736.8
(22) Date of filing: 28.08.2025
(51) Int. Cl.: H04N 1/10, H04N 1/00

(54) **DOCUMENT GUIDE MEMBER FOR DOCUMENT READER AND IMAGE FORMING SYSTEM**

(30) Priority: 26.03.2025 JP 2025052130
(71) Applicant: Fujifilm Business Innovation Corp., Tokyo 107-0052 (JP)
(72) Inventor: NAKAI, Daisuke, Yokohama (JP); KITAICHI, Yasuhiro, Yokohama (JP)
(74) Representative: Meissner Bolte Partnerschaft mbB

(57) **Abstract**

A document reader includes: a platen glass on which a document is to be placed; a reading part that reads the document placed on the platen glass from below; a metal frame that supports the platen glass; and a plastic guide member including: a covering part fixed to an upper surface of the frame, extending along one side of the platen glass, and covering the one side from above; a scale provided on an upper surface of the covering part and indicating a size of the document; and a projection protruding downward from the covering part, extending along the covering part, and sandwiched between the frame and the one side.

## Description

### Background

### (i) Technical Field

The present disclosure relates to a document reader and an image forming system.

### (ii) Related Art

Japanese Unexamined Patent Application Publication No. 2002-296707 discloses a method for positioning a platen glass of an image reader that reads an image formed on a document by irradiating the document placed on the platen glass with light from a light source lamp and capturing the reflected light. In this method for positioning a platen glass, first, a guide member for guiding the position of the document is attached to the surface of the platen glass. Next, one end of the platen glass is linked to a glass holder that fixes the platen glass to an apparatus body and guides the position of the document. Next, the platen glass is attached to the apparatus body, and an image is read in a state in which a predetermined document is placed at a predetermined position. Next, image data is acquired from the predetermined document while shifting the platen glass. Next, at a position where predetermined image data is obtained, a positioning member that is removably linked to the other end of the platen glass is fixed to the apparatus body in a state of being engaged with the platen glass. Then, the platen glass is pressed against the positioning member by means of the glass holder so as to be positioned.

Japanese Unexamined Patent Application Publication No. 6-95271 discloses an image forming apparatus. In this image forming apparatus, a document placed on a platen glass is illuminated with a light source provided in a transmission light source device. Then, the resulting transmitted light is guided to an exposure unit by an optical member, and a photosensitive material is exposed in the exposure unit to form an image. The image forming apparatus includes a document registration plate, an attachment, and a positioning projection. The document registration plate is fixed in the vicinity of the platen glass. The document registration plate has a positioning fitting hole at a desired position. The attachment is detachably disposed on the registration plate. The attachment has a guide portion that is open on the side closer to the platen glass and communicates with the fitting hole in the registration plate when the attachment is disposed on the registration plate. The positioning projection is provided on the lower surface of the transmission light source device. The positioning projection is fitted into the fitting hole, thus positioning the transmission light source device at a desired position on the platen glass. In this image forming apparatus, when the transmission light source device is positioned on the platen glass, the attachment is disposed on the registration plate. The guide portion formed on the attachment guides the positioning projection to the fitting hole.

### Summary

Accordingly, it is an object of the present disclosure to correct horizontal warping of a guide member that is used for positioning a document placed on a platen glass.

According to a first aspect of the present disclosure, there is provided a document reader including: a platen glass on which a document is to be placed; a reading part that reads the document placed on the platen glass from below; a metal frame that supports the platen glass; and a plastic guide member including: a covering part fixed to an upper surface of the frame, extending along one side of the platen glass, and covering the one side from above; a scale provided on an upper surface of the covering part and indicating a size of the document; and a projection protruding downward from the covering part, extending along the covering part, and sandwiched between the frame and the one side.

According to a second aspect of the present disclosure, in the document reader according to the first aspect, the guide member includes: a first guide member disposed along the one side of the platen glass; and a second guide member disposed along another side of the platen glass orthogonal to the one side.

According to a third aspect of the present disclosure, in the document reader according to the second aspect, the frame includes a first frame part extending in a main scanning direction and a second frame part integral with the first frame part and extending in a sub-scanning direction, the projection of the first guide member is sandwiched between the first frame part and the one side, and the projection of the second guide member is sandwiched between the second frame part and the other side.

According to a fourth aspect of the present disclosure, in the document reader according to the third aspect, the first frame part has a plate-like shape, the projection of the first guide member has an overhang portion protruding away from the platen glass and extending along the projection, and an end of the first frame part is sandwiched between the overhang portion and the covering part.

According to a fifth aspect of the present disclosure, in the document reader according to the fourth aspect, the covering part of the first guide member is fixed to an upper surface of the second frame part.

According to a sixth aspect of the present disclosure, in the document reader according to any one of the third to fifth aspects, the second frame part includes an upper plate portion constituting an upper surface, and a support plate portion provided below the upper plate portion and supporting the other side of the platen glass, and the projection of the second guide member is separated from the upper surface of the support plate portion.

According to a seventh aspect of the present disclosure, in the document reader according to the sixth aspect, the covering part of the second guide member covers the support plate portion in plan view.

According to an eighth aspect of the present disclosure, in the document reader according to any one of the first to seventh aspects, the covering part of the guide member is fixed to the upper surface of the frame with a screw member.

According to a ninth aspect of the present disclosure, there is provided an image forming system comprising: the document reader according to any one of the first to eighth aspects; and an image forming apparatus that forms an image on a sheet based on information read by the document reader.

With the document reader of the first aspect, it is possible to correct horizontal warping of the guide member used for positioning the document placed on the platen glass.

With the document reader of the second aspect, it is possible to ensure the perpendicularity between the first guide member and the second guide member.

With the document reader of the third aspect, it is possible to ensure the perpendicularity between the first guide member and the second guide member, compared with a structure in which the first frame part and the second frame part are separated.

With the document reader of the fourth aspect, it is possible to correct vertical warping of the first guide member.

With the document reader of the fifth aspect, it is possible to ensure the perpendicularity between the first guide member and the second guide member, compared with a structure in which the first guide member is fixed to the first frame part and the second guide member is fixed to the second frame part.

With the document reader of the sixth aspect, it is possible to reduce the gap between the platen glass and the covering part of the second guide member, compared with a structure in which the projection of the second guide member is in contact with the upper surface of the support plate portion.

With the document reader of the seventh aspect, it is possible to improve the appearance, compared with a structure in which the support plate portion protrudes from the covering part of the second guide member in plan view.

With the document reader of the eighth aspect, it is easy to replace the guide member, compared with a structure in which the covering part of the guide member is fixed to the upper surface of the frame with an adhesive.

With the image forming system of the ninth aspect, it is possible to copy an image on the document, positioned by the guide member, onto a sheet.

### Brief Description of the Drawings

Exemplary embodiments of the present disclosure will be described in detail based on the following figures, wherein:
Fig. 1 is a perspective view of a document reader according to an exemplary embodiment of the present disclosure, illustrating a state in which a document feeder is open with respect to a document bed;
Fig. 2 is a schematic view of the document reader illustrated in Fig. 1;
Fig. 3 is a perspective view of an upper surface of the document bed illustrated in Fig. 2;
Fig. 4 is a plan view of the upper surface of the document bed illustrated in Fig. 3;
Fig. 5 is a sectional view taken along line V-V in Fig. 4; and
Fig. 6 is a sectional view taken along line VI-VI in Fig. 4.

### Detailed Description

Hereinbelow, an image forming apparatus, which is an example of a document reader and an image forming system according to an exemplary embodiment of the present disclosure, will be described with reference to the drawings.

### Image Forming Apparatus

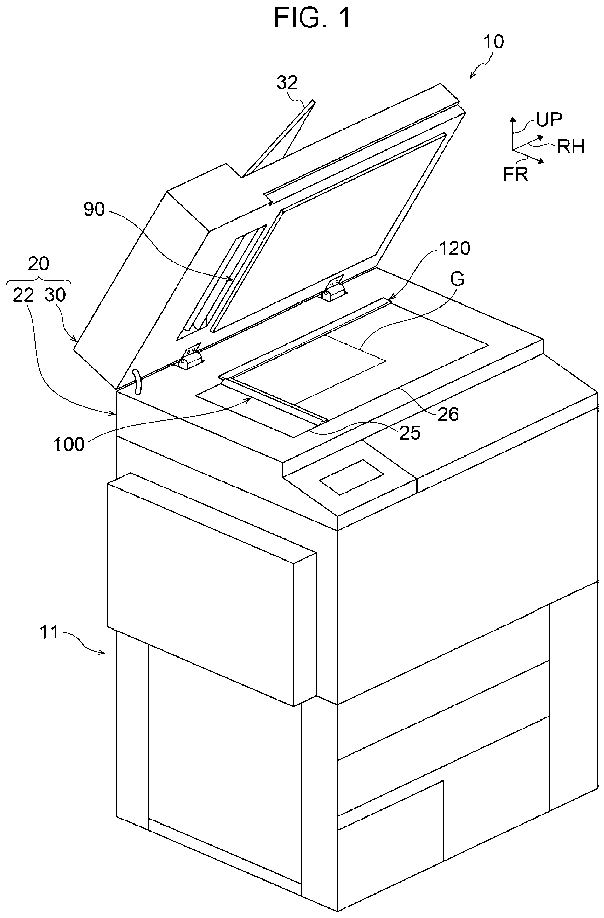

An image forming apparatus 10 according to this exemplary embodiment will be described. Fig. 1 is a perspective view of the image forming apparatus 10.

In Fig. 1 and other figures, arrow UP indicates an upward direction (vertically upward direction) of the apparatus. Hence, the direction opposite to arrow UP is a downward direction (vertically downward direction) of the apparatus. In Fig. 1 and other figures, arrow FR indicates the forward direction of the apparatus. Hence, the direction opposite to arrow FR is the backward direction of the apparatus. In Fig. 1 and other figures, arrow RH indicates the rightward direction of the apparatus. Hence, the direction opposite to arrow RH is the leftward direction of the apparatus. These directions are defined for convenience of description, and the configuration of the apparatus is not limited to these directions.

The front-rear direction and the left-right direction of the apparatus may also be expressed as the lateral directions, the side directions, and the horizontal directions of the apparatus. In addition, the term "apparatus" may be omitted when referring to the directions of the apparatus. Specifically, for example, "the upward direction of the apparatus" may be simply referred to as "the upward direction". In addition, in the drawings, the symbol "o" with "•" therein means an arrow pointing the near side with respect to the plane of the drawings.

In addition, the same or similar components are denoted by the same reference numerals across the drawings. In the following exemplary embodiments, redundant descriptions and reference numerals may be omitted. The drawings used in the following description are all schematic, and the dimensional relationship between elements, the ratio of elements, and the like illustrated in the drawings do not necessarily coincide with the actual ones. In addition, the dimensional relationships of the elements, the ratios of the elements, and the like do not necessarily coincide with one another among the drawings.

The image forming apparatus 10 illustrated in Fig. 1 forms an image. Specifically, as illustrated in Fig. 1, the image forming apparatus 10 includes an image forming apparatus body 11 and a document reader 20. Hereinbelow, the components of the image forming apparatus 10 will be described.

The image forming apparatus body 11 illustrated in Fig. 1 is provided with the components of the image forming apparatus 10. Specifically, the image forming apparatus body 11 includes a box-shaped housing.

The image forming apparatus body 11 includes a medium container, an image forming part, a transport mechanism, and a medium discharge part, which are not illustrated. The document reader 20 is provided at the upper end of the image forming apparatus body 11.

The medium container stores recording media (not illustrated), and a recording medium on which an image has been formed by the image forming part is discharged to the medium discharge part. The transport mechanism transports a recording medium from the medium container to the image forming part, and transports the recording medium on which an image has been formed by the image forming part from the image forming part to the medium discharge part.

The image forming part forms an image on a recording medium fed from the medium container. Examples of the image forming part include an inkjet image forming part that uses ink to form an image on a recording medium, and an electrophotographic image forming part that uses toner to form an image on a recording medium.

The inkjet image forming part forms an image on a recording medium by, for example, ejecting ink droplets from an ejecting part onto the recording medium. Alternatively, the inkjet image forming part may form an image on a recording medium by ejecting ink droplets from an ejecting part to a transfer body, and then transferring the ink droplets from the transfer body to the recording medium.

The electrophotographic image forming part forms an image on a recording medium by performing, for example, charging, exposure, development, transfer, and fixing. Alternatively, the electrophotographic image forming part may form an image on a recording medium by forming an image on a transfer member by performing charging, exposure, development, and transfer, transferring the image from the transfer member to the recording medium, and then fixing the image on the recording medium.

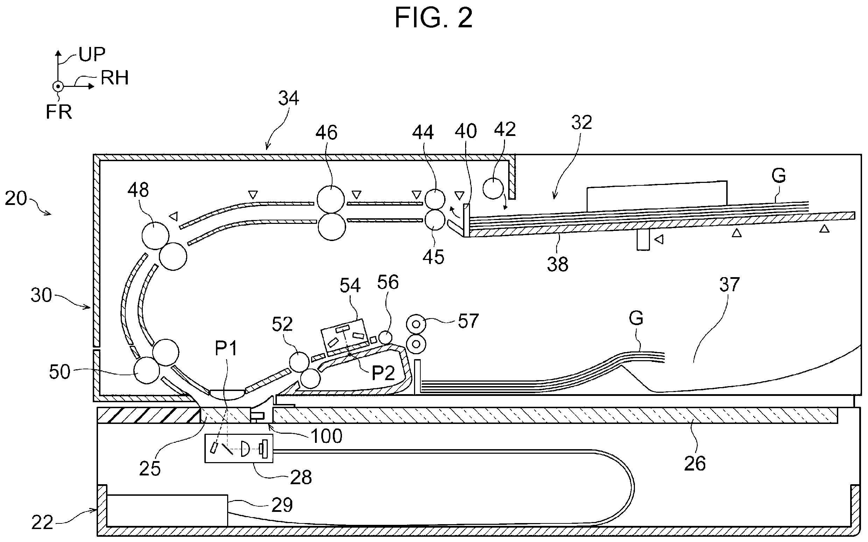

In the image forming apparatus 10, when an image of a document G (see Fig. 2) is copied, the image forming part forms, on a recording medium, an image read by a reading unit 28 and a reading sensor 54 (see Fig. 2), which is an example of a reading part described below, of the document reader 20.

An example of the image forming part is not limited to the inkjet image forming part and the electrophotographic image forming part described above, and various image forming parts may be used.

### Document Reader

Fig. 1 is a perspective view illustrating a state in which a document feeder 30, described below, of the document reader 20 is in an open position. Fig. 2 schematically illustrates the document reader 20.

As illustrated in Fig. 2, the document reader 20 reads an image on a document G. The document reader 20 includes a document bed 22, the document feeder 30, and a guide member 90.

### Document Bed 22

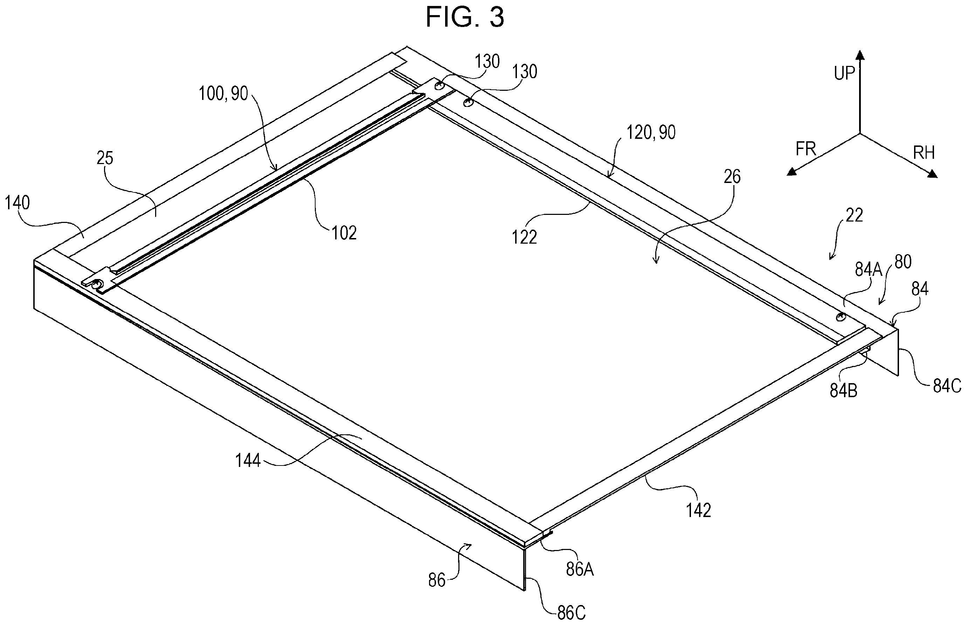

The document bed 22 has a box shape. As illustrated in Fig. 3, the upper part of the document bed 22 is reinforced by a metal frame 80. The metal frame 80 includes a first frame part 82 and a second frame part 84.

The first frame part 82 is a metal plate extending in the main scanning direction of the reading unit 28 described below, that is, in the apparatus front-rear direction.

The second frame part 84 is a substantially L-shaped metal member extending in the sub-scanning direction of the reading unit 28, that is, the apparatus left-right direction. Specifically, the second frame part 84 includes an upper plate portion 84A, a support plate portion 84B, and a side plate portion 84C. The upper plate portion 84A extends in the apparatus left-right direction and constitutes the upper surface of the second frame part 84. The support plate portion 84B extends in the apparatus left-right direction and is provided below the upper plate portion 84A of the second frame 84. Specifically, the support plate portion 84B is provided below the upper plate portion 84A by the thickness of a platen glass 26 described below. The support plate portion 84B supports a first long side 26C, which is another side of the platen glass 26. The side plate portion 84C constitutes the side surface of the second frame 84 extending in the apparatus left-right direction. The width direction of the side plate portion 84C corresponds to the apparatus vertical direction.

The first frame part 82 extends in the sub-scanning direction at a position slightly below the upper plate portion 84A of the second frame part 84. In this exemplary embodiment, the first frame part 82 and the second frame part 84 have the same thickness, and the first frame part 82 extends in the sub-scanning direction at a position below the upper plate portion 84A by the thickness of the upper plate portion 84A. In this exemplary embodiment, the thickness of the platen glass 26 is greater than the thickness of the second frame part 84. Hence, the upper surface of the first frame part 82 is located between the upper surface of the upper plate portion 84A and the upper surface of the support plate portion 84B of the second frame part 84.

The first frame part 82 is integrated with the second frame part 84. Specifically, the first frame part 82 and the second frame part 84 are formed by bending the same metal plate. Note that this exemplary embodiment is not limited to this configuration. The first frame part 82 and the second frame part 84 may be formed by bending metal plates of the same plate thickness, and the first frame part 82 and the second frame part 84 may be integrated by joining (for example, welding) the upper surface of the first frame part 82 to the lower surface of the second frame part 84.

In this exemplary embodiment, the main scanning direction in which the first frame part 82 extends and the sub-scanning direction in which the second frame part 84 extends are orthogonal to each other.

The frame 80 of this exemplary embodiment includes, at the front of the apparatus, a third frame part 86 facing the second frame part 84. The third frame part 86 is a substantially L-shaped metal member extending in the sub-scanning direction, that is, the apparatus left-right direction. Specifically, the third frame part 86 includes an upper plate portion 86A and a side plate portion 86C. The upper plate portion 86A extends in the apparatus left-right direction and constitutes the upper surface of the third frame part 86. The upper plate portion 86A supports a second long side 26D of the platen glass 26. The side plate portion 86C extends in the apparatus left-right direction and constitutes the side surface of the third frame 86. The width direction of the side plate portion 86C corresponds to the apparatus vertical direction.

In this exemplary embodiment, the upper surface of the third frame part 86 is located below the upper surface of the second frame part 84 by the thickness of the platen glass 26. In other words, the upper surface of the third frame part 86 is located at the same height as the upper surface of the support plate portion 84B of the second frame part 84. This ensures the levelness of the platen glass 26 supported by the third frame part 86 and the second frame part 84.

Furthermore, the distal end of the upper plate portion 86A of the third frame part 86 and the end of the first frame part 82 in the longitudinal direction are connected to each other. Specifically, the end of the first frame part 82 in the longitudinal direction is bent downward and is connected to the distal end of the upper plate portion 86A of the third frame part 86. In this exemplary embodiment, the first frame part 82, the second frame part 84, and the third frame part 86 are integrated.

The document feeder 30 is disposed on the upper surface of the document bed 22. The document feeder 30 is provided on the document bed 22 so as to be able to open and close the upper surface of the document bed 22. That is, the document feeder 30 is rotatably supported by the document bed 22.

A reading window 25 is disposed on the left side of the upper surface of the document bed 22. The document G transported by the document feeder 30 passes above the reading window 25. The platen glass 26 that supports the document G placed by a user is disposed to the right of the reading window 25.

The platen glass 26 has a rectangular shape. The platen glass 26 is longer in the sub-scanning direction than in the main scanning direction. Accordingly, the short side at one end of the platen glass 26 in the longitudinal direction, on the left side of the apparatus, is referred to as a first short side 26A. The short side at the other end of the platen glass 26 in the longitudinal direction, on the right side of the apparatus, and opposing the first short side 26A is referred to as a second short side 26B. The long side at one end of the platen glass 26 in the short-side direction, on the rear side of the apparatus, is referred to as a first long side 26C. The long side at the other end of the platen glass 26 in the short-side direction, on the front side of the apparatus, and opposing the first long side 26C is referred to as a second long side 26D.

The first long side 26C of the platen glass 26 is supported by the support plate portion 84B of the second frame part 84. The second long side 26D of the platen glass 26 is supported by the upper plate portion 86A of the third frame part 86.

A projection 104 of a registration guide 100 described below is disposed between the reading window 25 and the platen glass 26. The registration guide 100 guides the document G that has passed through the reading window 25 into the document feeder 30. A plastic cover 140 is disposed to the left of the reading window 25.

The reading unit 28, which is an example of a reading part, is disposed inside the document bed 22. The reading unit 28 is supported so as to be movable in the left-right direction, which is an example of a sub-scanning direction, along the lower surfaces of the reading window 25 and the platen glass 26. Thus, the reading unit 28 reads the document G placed on the platen glass 26 from below. The reading unit 28 is normally stopped at an initial position illustrated in Fig. 2.

Inside the document bed 22, an image processing unit 29, which is an example of a processing unit, is disposed below the reading unit 28. The image processing unit 29 is electrically connected to the reading unit 28.

The image processing unit 29 converts RGB (red, green, and blue) electric signals input from the reading unit 28 into CMYK (cyan, magenta, yellow, and black) image data and temporarily stores the image data. The image processing unit 29 outputs, as the image data, the stored image data to the image forming part of the image forming apparatus body part 11 at a preset time.

### Document Feeder 30

The document feeder 30 includes a document feed tray 32, which is an example of a document stacking part, on which multiple documents G to be copied are stacked and accommodated. A document transport unit 34 is provided to the left of the document feed tray 32. The document transport unit 34 transports the document G along the transport path. A document discharge tray 37, which is an example of a document discharge part, is disposed below the document feed tray 32. The document G is discharged from the document transport unit 34 to the document discharge tray 37.

The document feed tray 32 includes a feed tray body 38. The feed tray body 38 has a plate-like shape extending obliquely upward to the right.

A set gate 40, which is an example of an alignment member for aligning the documents G, is disposed at the left end of the document feed tray 32. The set gate 40 is rotatably supported. The set gate 40 is held suspended before the documents G are transported, and the leading ends of the documents G in the transport direction are abutted against the set gate 40 so that the documents G are aligned. When the documents G start to be transported, the set gate 40 is released and rotatable to the downstream side so as not to hinder the transport of the documents G.

A pickup roller 42, which is an example of a document pickup member, is disposed above and upstream of the set gate 40 in the transport direction of the documents G. The pickup roller 42 is movable in the up-down direction.

A transport roller 44, which is an example of a document transport member, is disposed downstream of the set gate 40. A separation roller 45, which is an example of a document separation member, is disposed below the transport roller 44 so as to face the transport roller 44.

A transport roller 46, which is an example of a document transport member having a skew correction function, is disposed downstream of the transport roller 44.

A transport roller 48, which is an example of a document transport member, is disposed downstream of the transport roller 46.

A transport roller 50, which is an example of a document transport member, is disposed downstream of the transport roller 48. The transport roller 50 adjusts the timing of transporting the document G toward a reading position P1, where a first side of the document G is to be read.

A transport roller 52, which is an example of a document transport member, is disposed downstream of the transport roller 50 and downstream of the reading position P1, where the first side is to be read. A reading position P2, where a second side of the document G is to be read, is set downstream of the transport roller 52. A reading sensor 54, which is an example of a second reading part, is disposed at the reading position P2, where the second side is to be read. The reading sensor 54 is a contact image sensor (CIS).

A reading roller 56, which is an example of a reading auxiliary member, is disposed downstream of the reading sensor 54. A discharge roller 57 for discharging the document G to the document discharge tray 37 is disposed downstream of the reading roller 56.

### Guide Member 90

The guide member 90 is a plastic member used for positioning the document G placed on the platen glass 26. As illustrated in Fig. 3, the guide member 90 includes a registration guide 100 and a side guide 120.

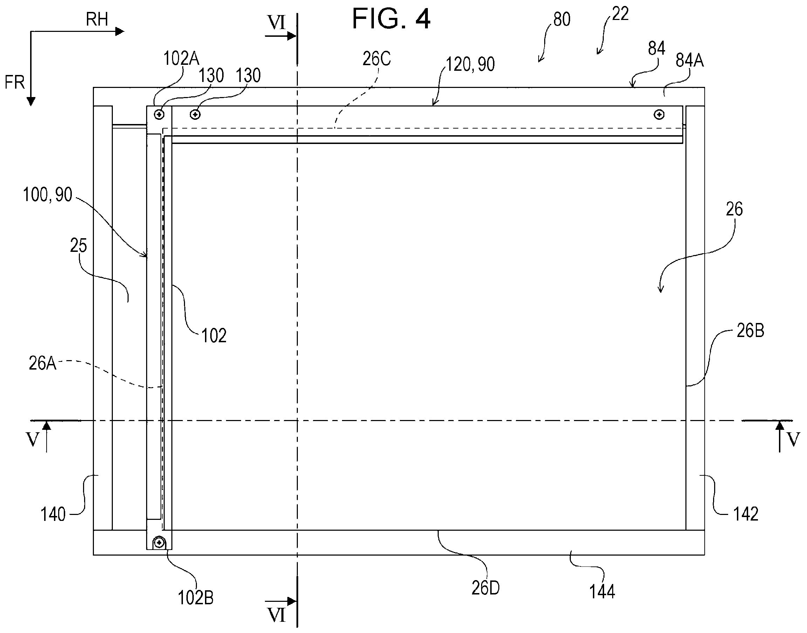

As illustrated in Figs. 3 and 4, the registration guide 100 is disposed along the first short side 26A of the platen glass 26. The registration guide 100 includes a covering part 102 and a projection 104.

In the registration guide 100, the covering part 102 is a plate-like portion extending along the first short side 26A of the platen glass 26. The covering part 102 covers the first short side 26A of the platen glass 26 from above. A scale 103 indicating the size of the document is provided on the upper surface of the covering part 102. The scale 103 is used for positioning the document G. In addition, one end 102A of the covering part 102 in the longitudinal direction is fixed to the upper surface of the upper plate portion 84A of the second frame part 84. The other end 102B of the covering part 102 in the longitudinal direction is fixed to the upper surface of the upper plate portion 86A of the third frame part 86. In this exemplary embodiment, the one end 102A of the covering part 102 is fixed to the upper plate portion 84A of the second frame part 84 with a screw member 130. The other end 102B of the covering part 102 is fixed to the upper plate portion 86A of the third frame part 86 with a screw member 130. The covering part 102 and the second frame part 84 do not necessarily have to be fixed to each other with the screw member 130. For example, an adhesive tape may be used. Similarly, the covering part 102 and the third frame part 86 may be fixed to each other with an adhesive tape.

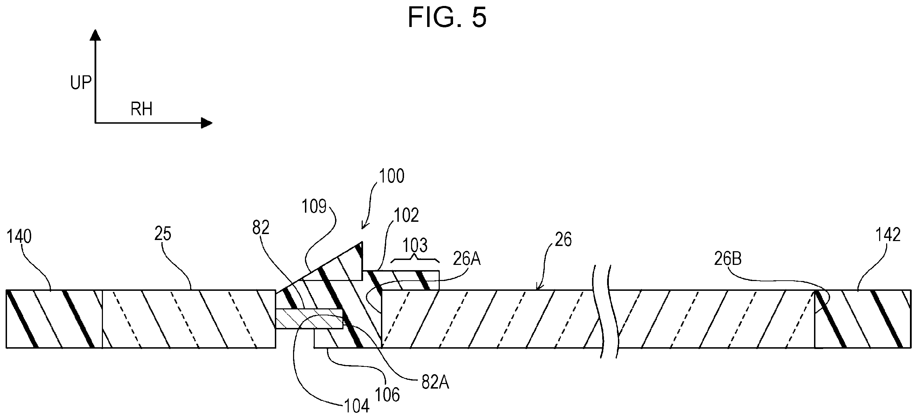

As illustrated in Fig. 5, the projection 104 is a portion of the registration guide 100 protruding downward from the lower surface of the covering part 102. The projection 104 extends along the covering part 102. The projection 104 of this exemplary embodiment is disposed between the support plate portion 84B of the second frame part 84 and the upper plate portion 86A of the third frame part 86. The projection 104 is sandwiched between an end 82A of the first frame part 82, on the right side of the apparatus, and the first short side 26A of the platen glass 26.

The registration guide 100 includes an overhang portion 106. The overhang portion 106 is a plate-like portion protruding away from the platen glass 26, from the projection 104 of the registration guide 100. In this exemplary embodiment, the overhang portion 106 protrudes toward the left side of the apparatus from the lower end of the projection 104. The overhang portion 106 extends along the projection 104. The end 82A of the first frame part 82 is sandwiched between the overhang portion 106 and the covering part 102 in the apparatus vertical direction.

Furthermore, a guide surface 109 for guiding the document G that has been read by the reading unit 28 along the transport path is provided on the upper surface of the covering part 102 of the registration guide 100. The guide surface 109 is the upper surface of a projection protruding from the upper surface of the covering part 102, and is inclined obliquely upward to the right. The guide surface 109 extends along the covering part 102.

As illustrated in Figs. 3 and 4, the side guide 120 is disposed along the first long side 26C of the platen glass 26. The side guide 120 includes a covering part 122 and a projection 124.

The covering part 122 is a plate-like portion of the side guide 120 extending along the first long side 26C of the platen glass 26. The covering part 122 covers the first long side 26C of the platen glass 26 from above. A scale 123 indicating the size of the document is provided on the upper surface of the covering part 122. The scale 123 is used for positioning the document G. One end 122A of the covering part 122 in the short-side direction is fixed to the upper surface of the upper plate portion 84A of the second frame part 84. In this exemplary embodiment, the one end 122A of the covering part 122 is fixed to the upper plate portion 84A of the second frame part 84 with a screw member 130. The covering part 122 and the second frame part 84 do not necessarily have to be fixed to each other with the screw member 130. For example, an adhesive tape may be used.

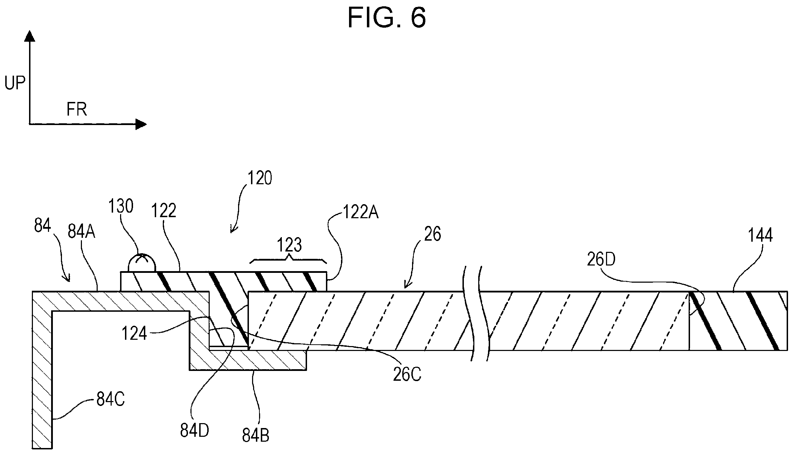

The projection 124 is a portion of the side guide 120 protruding downward from the lower surface of the covering part 122. The projection 124 extends along the covering part 122. As illustrated in Fig. 6, the projection 124 is sandwiched between a step 84D between the upper plate portion 84A and the support plate portion 84B of the second frame part 84 and the first long side 26C of the platen glass 26.

The distal end of the protrusion 124 is separated from the upper surface of the support plate portion 84B. In other words, there is a gap between the distal end of the projection 124 and the upper surface of the support plate portion 84B.

The covering part 122 of the side guide 120 covers the support plate portion 84B of the second frame part 84 in plan view. Specifically, as illustrated in Fig. 6, the end 122A (i.e., the front end) of the covering part 122 in the width direction is positioned further toward the front side of the apparatus than the distal end (i.e., the front end) of the support plate portion 84B.

Next, the operation of this exemplary embodiment will be described.
In this exemplary embodiment, when the registration guide 100 is installed, the projection 104 is pressed against the end 82A of the first frame part 82 by means of the first short side 26A of the platen glass 26. Specifically, the second short side 26B of the platen glass 26 is pressed by a plastic cover 142 extending between the second frame part 84 and the third frame part 86. By pressing the projection 104 against the end 82A of the first frame part 82 by means of the first short side 26A of the platen glass 26, it is possible to correct horizontal warping of the registration guide 100 (projection 104) used for positioning the document G.

In this exemplary embodiment, when the side guide 120 is installed, the projection 124 is pressed against the step 84D of the second frame part 84 by means of the first long side 26C of the platen glass 26. Specifically, the second long side 26D of the platen glass 26 is pressed with a plastic cover 144 disposed on the third frame part 86. By pressing the projection 124 against the step 84D of the second frame part 84 by means of the first long side 26C of the platen glass 26, it is possible to correct horizontal warping of the side guide 120 (projection 124) used for positioning the document G.

Furthermore, in this exemplary embodiment, the side guide 120 is disposed along the first long side 26C orthogonal to the first short side 26A of the platen glass 26. Thus, the perpendicularity between the registration guide 100 and the side guide 120 is ensured.

In this exemplary embodiment, the first frame part 82 and the second frame part 84 are integrated. Thus, the perpendicularity between the registration guide 100 and the side guide 120 is ensured, compared with a structure in which the first frame part 82 and the second frame part 84 are separated.

In this exemplary embodiment, the registration guide 100 is provided with the overhang portion 106, and the end 82A of the first frame part 82 is sandwiched between the overhang portion 106 and the covering part 102. Thus, it is possible to correct vertical warping of the registration guide 100.

In this exemplary embodiment, the one end 102A, in the longitudinal direction, of the covering part 102 of the registration guide 100 is fixed to the upper surface of the second frame part 84. Hence, in this exemplary embodiment, the perpendicularity between the registration guide 100 and the side guide 120 is ensured, compared with a structure in which the registration guide 100 is fixed to the first frame part 82, and the side guide 120 is fixed to the second frame part 84.

In this exemplary embodiment, the projection 124 of the side guide 120 is separated from the upper surface of the support plate portion 84B. Hence, in this exemplary embodiment, the gap between the platen glass 26 and the covering part 122 of the side guide 120 is reduced, compared with a structure in which the projection 124 of the side guide 120 is in contact with the upper surface of the support plate portion 84B. Reducing the gap prevents entry of the document G into the gap. Also, entry of foreign matter into the gap is prevented.

In this exemplary embodiment, the covering part 122 of the side guide 120 covers the support plate portion 84B in plan view. Hence, in this exemplary embodiment, the appearance of the inside of the document bed 22 viewed through the platen glass 26 is improved, compared with a structure in which the support plate portion protrudes from the covering part of the second guide member in plan view.

In this exemplary embodiment, the covering part 102 of the registration guide 100 is fixed to the upper surface of the second frame part 84 with the screw member 130. Hence, it is easy to replace the registration guide 100, compared with a structure in which the covering part 102 of the registration guide 100 is fixed to the upper surface of the second frame part 84 with an adhesive. The covering part 122 of the side guide 120 is fixed to the upper surface of the second frame part 84 with the screw member 130. Hence, it is easy to replace the side guide 120, compared with a structure in which the covering part 122 of the side guide 120 is fixed to the upper surface of the second frame part 84 with an adhesive.

In this exemplary embodiment, because horizontal warping of the registration guide 100 and the side guide 120 is corrected, it is possible to copy an image on the document G, positioned by the registration guide 100 and the side guide 120, onto a sheet.

### Other Exemplary Embodiments

In the above-described exemplary embodiment, the perpendicularity is ensured by pressing the registration guide 100 and the side guide 120 against the corresponding frame parts by means of the platen glass 26. However, the present disclosure is not limited to this structure. The perpendicularity of the registration guide 100 and the side guide 120 may be further improved by using a jig having a right triangle shape.

Although the specific exemplary embodiments of the present disclosure have been described in detail above, the present disclosure is not limited to these embodiments. It is apparent to those skilled in the art that various other embodiments may be made within the scope of the present disclosure.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A document reader comprising:
   a platen glass on which a document is to be placed;
   a reading part that reads the document placed on the platen glass from below;
   a metal frame that supports the platen glass; and
   a plastic guide member including: a covering part fixed to an upper surface of the frame, extending along one side of the platen glass, and covering the one side from above; a scale provided on an upper surface of the covering part and indicating a size of the document; and a projection protruding downward from the covering part, extending along the covering part, and sandwiched between the frame and the one side.
(((2))) The document reader according to (((1))), wherein:
   the guide member includes:
   a first guide member disposed along the one side of the platen glass; and
   a second guide member disposed along another side of the platen glass orthogonal to the one side.
(((3))) The document reader according to (((2))), wherein:
   the frame includes a first frame part extending in a main scanning direction and a second frame part integral with the first frame part and extending in a sub-scanning direction,
   the projection of the first guide member is sandwiched between the first frame part and the one side, and
   the projection of the second guide member is sandwiched between the second frame part and the other side.
(4) The document reader according to (((3))), wherein:
   the first frame part has a plate-like shape,
   the projection of the first guide member has an overhang portion protruding away from the platen glass and extending along the projection, and
   an end of the first frame part is sandwiched between the overhang portion and the covering part.
(((5))) The document reader according to (((4))), wherein the covering part of the first guide member is fixed to an upper surface of the second frame part.
(((6))) The document reader according to any one of (((3))) to (((5))), wherein:
   the second frame part includes an upper plate portion constituting an upper surface, and a support plate portion provided below the upper plate portion and supporting the other side of the platen glass, and
   the projection of the second guide member is separated from the upper surface of the support plate portion.
(((7))) The document reader according to (((6))), wherein the covering part of the second guide member covers the support plate portion in plan view.
(((8))) The document reader according to any one of (((1))) to (((7))), wherein the covering part of the guide member is fixed to the upper surface of the frame with a screw member.
(((9))) An image forming system comprising:
   the document reader according to any one of (((1))) to (((8))); and
   an image forming apparatus that forms an image on a sheet based on information read by the document reader.

With the document reader of (((1))) it is possible to correct horizontal warping of the guide member used for positioning the document placed on the platen glass.

With the document reader of (((2))), it is possible to ensure the perpendicularity between the first guide member and the second guide member.

With the document reader of (((3))), it is possible to ensure the perpendicularity between the first guide member and the second guide member, compared with a structure in which the first frame part and the second frame part are separated.

With the document reader of (((4))), it is possible to correct vertical warping of the first guide member.

With the document reader of (((5))), it is possible to ensure the perpendicularity between the first guide member and the second guide member, compared with a structure in which the first guide member is fixed to the first frame part and the second guide member is fixed to the second frame part.

With the document reader of (((6))), it is possible to reduce the gap between the platen glass and the covering part of the second guide member, compared with a structure in which the projection of the second guide member is in contact with the upper surface of the support plate portion.

With the document reader of (((7))), it is possible to improve the appearance, compared with a structure in which the support plate portion protrudes from the covering part of the second guide member in plan view.

With the document reader of (((8))), it is easy to replace the guide member, compared with a structure in which the covering part of the guide member is fixed to the upper surface of the frame with an adhesive.

With the image forming system of (((9))), it is possible to copy an image on the document, positioned by the guide member, onto a sheet.

## Claims

1. A document reader comprising:
a platen glass on which a document is to be placed;
a reading part that reads the document placed on the platen glass from below;
a metal frame that supports the platen glass; and
a plastic guide member including: a covering part fixed to an upper surface of the frame, extending along one side of the platen glass, and covering the one side from above; a scale provided on an upper surface of the covering part and indicating a size of the document; and a projection protruding downward from the covering part, extending along the covering part, and sandwiched between the frame and the one side.

2. The document reader according to claim 1, wherein:
the guide member includes:
a first guide member disposed along the one side of the platen glass; and
a second guide member disposed along another side of the platen glass orthogonal to the one side.

3. The document reader according to claim 2, wherein:
the frame includes a first frame part extending in a main scanning direction and a second frame part integral with the first frame part and extending in a sub-scanning direction,
the projection of the first guide member is sandwiched between the first frame part and the one side, and
the projection of the second guide member is sandwiched between the second frame part and the other side.

4. The document reader according to claim 3, wherein:
the first frame part has a plate-like shape,
the projection of the first guide member has an overhang portion protruding away from the platen glass and extending along the projection, and
an end of the first frame part is sandwiched between the overhang portion and the covering part.

5. The document reader according to claim 4, wherein the covering part of the first guide member is fixed to an upper surface of the second frame part.

6. The document reader according to any one of claims 3 to 5, wherein:
the second frame part includes an upper plate portion constituting an upper surface, and a support plate portion provided below the upper plate portion and supporting the other side of the platen glass, and
the projection of the second guide member is separated from the upper surface of the support plate portion.

7. The document reader according to claim 6, wherein the covering part of the second guide member covers the support plate portion in plan view.

8. The document reader according to any one of claims 1 to 7, wherein the covering part of the guide member is fixed to the upper surface of the frame with a screw member.

9. An image forming system comprising:
the document reader according to any one of claims 1 to 8; and
an image forming apparatus that forms an image on a sheet based on information read by the document reader.
